# EUROPEAN PATENT SPECIFICATION

(11) **EP 4 124 563 B1**
(45) Date of publication and mention of the grant of the patent: **17.04.2024**
(21) Application number: 22184896.3
(22) Date of filing: 14.07.2022
(51) Int. Cl.: B63B 35/00, B63H 25/04, G05D 1/00, G05D 1/02

(54) **AUTOPILOT DRIVE RELEASE BASED ON STEERING WHEEL TORQUE SYSTEMS AND METHODS**
AUTOPILOT-ANTRIEBSFREIGABE BASIEREND AUF LENKRADDREHMOMENT-SYSTEMEN UND -VERFAHREN
LIBÉRATION D'ENTRAÎNEMENT DU PILOTE AUTOMATIQUE BASÉE SUR DES SYSTÈMES ET PROCÉDÉS DE COUPLE DE VOLANT DE DIRECTION

(30) Priority: 30.07.2021 US 202163227845 P; 13.07.2022 US 202217864267
(43) Date of publication of application: 01.02.2023
(73) Proprietor: Flir Belgium BVBA, 2321 Meer (BE)
(72) Inventor: Moth, Richard T., Fareham (GB); Johnson, Mark, Vannes Cedex (FR)
(74) Representative: Murgitroyd & Company

(56) References cited:
- EP-A1- 3 187 952
- EP-B1- 2 518 578
- US-A- 5 264 768
- US-A1- 2014 303 827

## Description

### TECHNICAL FIELD

One or more embodiments of the invention relate generally to autopilot drives for mobile structures and more particularly, for example, to systems and methods for disengaging an autopilot of a mobile structure when a torque or other force is applied to a steering mechanism of the mobile structure.

### BACKGROUND

Directional control systems and methods are used to provide automated and/or supplemented control for planes, watercraft, automobiles, and other mobile structures. These directional control systems allow for automated changing of positions and alignment of directional components, including rudders, wheels, and the like. For example, an autopilot may be used to control a watercraft, such as a boat, on a specific course, heading, or waypoint by controlling a rudder and/or propulsion system if the watercraft.

Most conventional autopilots are enabled and disabled through manipulation of inputs including a touch screen, keyboard, keypad, or the like that contain "autopilot" and "manual" drive features. A user must manually disable the autopilot before being able to steer the corresponding mobile structure without being fought by the autopilot. There may be substantial delay, for example, to find and push a "manual" drive button and/or to spin or steer a steering wheel or mechanism faster than an autopilot. When the autopilot is not disengaged quickly in an emergency situation, such as when an object is on a heading of the mobile structure, the autopilot risks collision with an object in the path of the mobile structure.

EP 2,518,578 discloses a monitoring module configured to identify a difference between measured position information for a controller and expected position information for the controller. The monitoring module is configured to compare the difference with thresholds for managing an autopilot in a control system of a vehicle based on a comparison such that the autopilot remains operating when a backdrive system is inoperative and an intentional override of the autopilot is absent.

US 5,264,768 discloses an active hand controller system wherein a feedback loop detects the position of a control stick to control a motor driving the control stick to thereby provide certain force feel characteristics to the control stick. The feedback loop includes a detector for detecting force exerted for the control stick to generate a signal indicative of the force or torque being applied to the control stick.

EP 3,187,952 discloses a hydraulic steering system including a logic device configured to communicate with an autopilot pump controller, a control surface reference sensor, an orientation sensor, and/or a gyroscope. Control and sensor signals provided by the pump controller and/or the various sensors are used to selectively enable and/or disable an autopilot release signal. The autopilot release signal enables or disables the autopilot pump controller or an autopilot pump.

US 2014/0303827 discloses adaptive methods for transitioning control to a driver, the system comprising a computing device controlling a vehicle autonomously that is configured to receive a request for a transition of the vehicle from autonomous mode to manual mode through an indication by the driver. The computing device determines the state of the vehicle based on parameters related to the autonomous operation of the vehicle. Based on the state of the vehicle and the indication, the computing device determines instructions corresponding to the transition of control, which includes a strategy for the transition and duration of time corresponding to the transition of control. The computing device provides the instructions to perform the transition of control of the vehicle from autonomous mode to manual mode.

There remains a need for an improved methodology to provide expedient, accurate, and reliable release of an autopilot for a mobile structure.

### SUMMARY

Techniques are disclosed for systems and methods to provide an autopilot drive release to users of mobile structures using a torque of a steering mechanism. A sailing system using an autopilot drive release and/or disengagement device includes a logic device in communication with one or more sensors of a torque or force sensing unit. Sensor signals provided by the various sensors are used to determine when a force is applied by a user to a steering mechanism, for example, by torquing a steering wheel to take over manual operation of the mobile structure. If the force applied is determined to be over a threshold level or amount, or if the force indicates a user input load and not an input load from an external source (e.g., water current or resistance on a rudder), then the autopilot drive may automatically be disengaged.

In various embodiments, a sailing user interface system may include an orientation sensor, a compass, a gyroscope, an accelerometer, a speed sensor, one or more additional sensors, actuators, controllers, user interfaces, mapping systems, and/or other modules mounted to or in proximity to a mobile structure. Each component of the system may be implemented with a logic device adapted to form one or more wired and/or wireless communication links for transmitting and/or receiving sensor signals, control signals, or other signals and/or data between the various components.

In a first aspect, there is provided a system according to claim 1.

In a second aspect, there is provided a method according to claim 9.

### BRIEF DESCRIPTION OF THE DRAWINGS

Fig. 1 illustrates a block diagram of an autopilot drive release system in accordance with an embodiment of the disclosure.
Fig. 2 illustrates a diagram of an autopilot drive release system integrated with a watercraft in accordance with an embodiment of the disclosure.
Fig. 3 illustrates a diagram of an autopilot drive release system integrated with a watercraft in accordance with an embodiment of the disclosure.
Fig. 4 illustrates a diagram of a steering mechanism with an autopilot drive release in accordance with an embodiment of the disclosure.
Fig. 5 illustrates a diagram of a steering mechanism with an autopilot drive release in accordance with an embodiment of the disclosure.
Figs. 6A-B illustrate diagrams of a steering mechanism with an autopilot drive release in accordance with an embodiment of the disclosure.
Fig. 7 illustrates flow diagram of various operations to provide an autopilot drive release based on steering wheel torque in accordance with embodiments of the disclosure.

Embodiments of the invention and their advantages are best understood by referring to the detailed description that follows. It should be appreciated that like reference numerals are used to identify like elements illustrated in one or more of the figures.

### DETAILED DESCRIPTION

In accordance with various embodiments of the present disclosure, autopilot drive release systems and methods are provided to generate an autopilot drive release signal to deactivate or disengage an autopilot and/or autopilot drive for a mobile structure, such as a watercraft, automatically without requiring additional user input. Such systems and methods may include an autopilot drive release device and/or controller in conjunction with a heading sensor, autopilot drive, and/or a steering mechanism (e.g., steering wheel, column, wheel hub, and the like) that provides measurements of torques and/or forces applied to the steering mechanism while a mobile structure is being driven by an autopilot according to a specified heading.

For example, an autopilot drive release device may be mounted to or within the steering mechanism and may include a strain gauge that detects a force or torque applied to a steering wheel (e.g., by a manual user input load to the steering wheel). If the torque or force exceeds a threshold level or amount or indicates a user input load, as opposed to an input load due to an external factor or source, the autopilot drive release system may disengage the autopilot drive. Embodiments of the present disclosure can reliably enable and disable an autopilot release or disengagement signal using control signals and a determined force applied to components of a steering mechanism independent of control signals from an autopilot controller. In some embodiments, such systems and methods may be used to disable an autopilot drive without using a controller for an input device that engages and disengages the autopilot drive using buttons and the like.

A steered mobile structure, such as a boat, typically include a helm station having a steering mechanism or cylinder (connected to a rudder and/or an outboard motor) and an autopilot drive connected to the steering mechanism to provide autopilot features for the mobile structure. When a skipper needs to make a course adjustment to avoid an obstacle, it is desirable to eliminate any need for a separate manual step of having to press or select a manual off or standby button to disengage the autopilot drive. If the skipper attempts to move the steering mechanism without disengaging the autopilot and/or the autopilot drive, then the autopilot will try to regain the original course. This may counteract the skipper's manual steering inputs, and so it is desirable to automatically 'release,' 'deactivate,' or 'disengage' the autopilot, particularly during a navigational crisis. The challenge addressed by embodiments of the disclosure is to provide a simple, clear, intuitive disengagement of an autopilot drive in order to reduce risk of collisions with objects, increase drive safety, and provide more responsive drive controls.

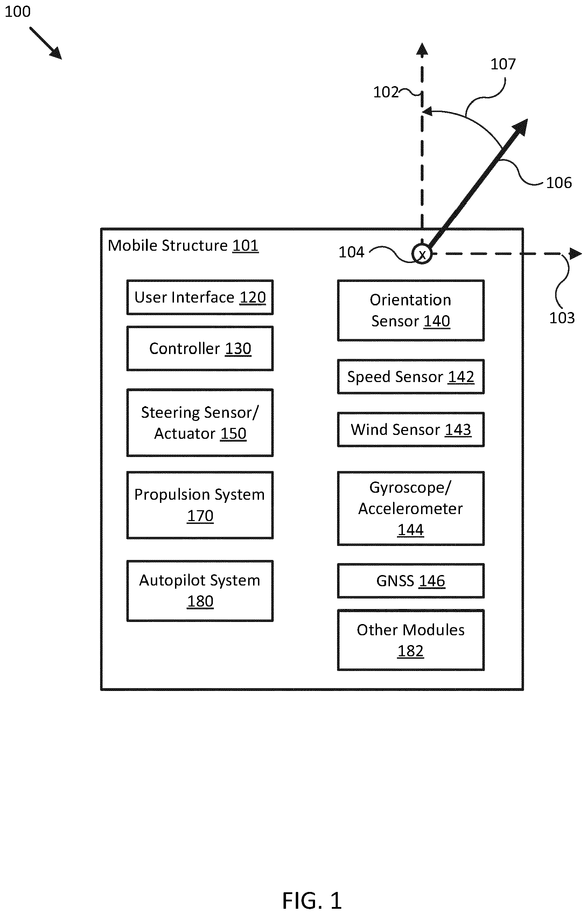

Fig. 1 illustrates a block diagram of an autopilot drive release system 100 in accordance with an embodiment of the disclosure. In various embodiments, system 100 may be adapted to measure a heading, an orientation, an acceleration, a wind velocity (e.g., direction and/or speed), and/or a speed of mobile structure 101, which may be provided as absolute and/or relative measurements (e.g., relative to Magnetic North or to a coordinate frame of mobile structure 101). System 100 may further include an autopilot drive and sensors and/or other autopilot system 180 to detect a torque and/or force applied to a steering mechanism of system 100 to disengage the autopilot drive, as described herein. In some embodiments, sensor signals corresponding to a user applied torque or force may be characterized by system 100 through user interaction with mobile system 100 and/or through autopiloting of mobile structure 101 by system 100, as described herein. In various embodiments, system 100 may use the characterized sensor signals and/or the applied torques and forces to control operation of mobile structure 101, such as controlling steering actuator 150 and/or propulsion system 170 to orient mobile structure 101 according to a desired heading and/or engage or disengage an autopilot drive of autopilot system 180.

In the embodiment shown in Fig. 1, system 100 may be implemented to provide autopilot drive release for a particular type of steered mobile structure 101, such as a watercraft, an aircraft, a vehicle, and/or other types of mobile structures. In one embodiment, system 100 may include one or more of a user interface 120, a controller 130, an orientation sensor 140, a speed sensor 142, a wind sensor 143, a gyroscope/ accelerometer 144, a global navigation satellite system receiver (GNSS) 146, a steering sensor/actuator 150, a propulsion system 170, autopilot system 180, and one or more other sensors and/or actuators (e.g., other modules 182). In some embodiments, one or more of the elements of system 100 may be implemented in a combined housing or structure that can be coupled to mobile structure 101 and/or held or carried by a user of mobile structure 101.

Directions 102, 103, and 104 describe one possible coordinate frame of mobile structure 101 (e.g., for headings or orientations measured by orientation sensor 140 and/or angular velocities and accelerations measured by gyroscope/accelerometer 144). As shown in Fig. 1, direction 102 illustrates a direction that may be substantially parallel to and/or aligned with a longitudinal axis of mobile structure 101, direction 103 illustrates a direction that may be substantially parallel to and/or aligned with a lateral axis of mobile structure 101, and direction 104 illustrates a direction that may be substantially parallel to and/or aligned with a vertical axis of mobile structure 101, as described herein. For example, a roll component of motion of mobile structure 101 may correspond to rotations around direction 102, a pitch component may correspond to rotations around direction 103, and a yaw component may correspond to rotations around direction 104.

Heading angle 107 may correspond to the angle between a projection of a reference direction 106 (e.g., the local component of the Earth's magnetic field) onto a horizontal plane (e.g., referenced to a gravitationally defined "down" vector local to mobile structure 101) and a projection of direction 102 onto the same horizontal plane. In some embodiments, the projection of reference direction 106 onto a horizontal plane (e.g., referenced to a gravitationally defined "down" vector) may be referred to as Magnetic North. In various embodiments, Magnetic North, a "down" vector, and/or various other directions, positions, and/or fixed or relative reference frames may define an absolute coordinate frame, for example, where directional measurements referenced to an absolute coordinate frame may be referred to as absolute directional measurements (e.g., an "absolute" orientation). In some embodiments, directional measurements may initially be referenced to a coordinate frame of a particular sensor and be transformed (e.g., using parameters for one or more coordinate frame transformations) to be referenced to an absolute coordinate frame and/or a coordinate frame of mobile structure 101. In various embodiments, an absolute coordinate frame may be defined and/or correspond to a coordinate frame with one or more undefined axes, such as a horizontal plane local to mobile structure 101 referenced to a local gravitational vector but with an unreferenced and/or undefined yaw reference (e.g., no reference to Magnetic North).

User interface 120 may be implemented as a display, a touch screen, a keyboard, a mouse, a joystick, a knob, a steering wheel, a ship's wheel or helm, a yoke, and/or any other device capable of accepting user input and/or providing feedback to a user. In various embodiments, user interface 120 may be adapted to provide user input (e.g., as a type of signal and/or sensor information) to other devices of system 100, such as controller 130. For example, user interface 120 may be used to conventionally engage or disengage an autopilot drive of autopilot system 180 through user input, such as an "autopilot" feature or operation and/or a "manual" feature or operation for control of mobile structure 101. User interface 120 may also be implemented with one or more logic devices that may be adapted to execute instructions, such as software instructions, implementing any of the various processes and/or methods described herein.

For example, user interface 120 may be adapted to form communication links, transmit and/or receive communications (e.g., sensor signals, control signals, sensor information, user input, and/or other information), determine wind directions, sail chart orientations, and/or performance contours, determine parameters for one or more coordinate frame transformations, and/or perform coordinate frame transformations, for example, or to perform various other processes and/or methods. User interface 120 may also be adapted to render and/or display one or more sail charts, heading vectors, mobile structure icons, performance contours, chart objects (e.g., indicating a position of a waypoint, a race pylon, a committee boat, a race start line, a competitor, a course limit, a stationary or mobile course hazard, and/or a physical object relative to a position of the mobile structure), extent icons, polar contours, sea trial performance contours, wind histograms, heel angle excursion diagrams, various overlays, and/or other diagrams and/or charts including sensor and/or other information as described herein.

In various embodiments, user interface 120 may be adapted to accept user input, for example, to form a communication link, to select a particular wireless networking protocol and/or parameters for a particular wireless networking protocol and/or wireless link (e.g., a password, an encryption key, a MAC address, a device identification number, a device operation profile, parameters for operation of a device, and/or other parameters), to select a method of processing sensor signals to determine sensor information, to adjust a position and/or orientation of an articulated sensor, and/or to otherwise facilitate operation of system 100 and devices within system 100. Once user interface 120 accepts a user input, the user input may be transmitted to other devices of system 100 over one or more communication links.

In one embodiment, user interface 120 may be adapted to receive a sensor or control signal (e.g., from orientation sensor 140 and/or steering sensor/actuator 150) over communication links formed by one or more associated logic devices, for example, and display sensor and/or other information corresponding to the received sensor or control signal to a user. In related embodiments, user interface 120 may be adapted to process sensor and/or control signals to determine sensor and/or other information. For example, a sensor signal may include an orientation, and angular velocity, an acceleration, a speed, a wind velocity, and/or a position for mobile structure 101. In such embodiment, user interface 120 may be adapted to process the sensor signals to determine sensor information indicating a performance contour, a sail chart, an estimated and/or absolute roll, pitch, and/or yaw (attitude and/or rate), and/or a position or series of positions of mobile structure 101, for example, and display the sensor information as feedback to a user. In one embodiment, user interface 120 may be adapted to display a time series of various sensor information and/or other parameters as part of or overlaid on a graph or map. For example, user interface 120 may be adapted to display a time series of positions, headings, and/or attitudes of mobile structure 101 overlaid on a geographical map, which may include one or more renderings indicating a corresponding time series of sail charts, performance contours, actuator control signals, and/or other sensor and/or control signals.

In some embodiments, user interface 120 may be adapted to accept user input including a user-defined target heading, waypoint, sailing route, and/or attitude for mobile structure 101, for example, and to generate control signals for steering sensor/actuator 150 and/or propulsion system 170 to cause mobile structure 101 to move according to the target heading, waypoint, sailing route, and/or attitude. More generally, user interface 120 may be adapted to display sensor information to a user, for example, and/or to transmit sensor information and/or user input to other user interfaces, sensors, or controllers of system 100, for instance, for display and/or further processing.

Controller 130 may be implemented as any appropriate logic device (e.g., processing device, microcontroller, processor, application specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of steering sensor/actuator 150, mobile structure 101, and/or system 100, for example. Such software instructions may also implement methods for processing sensor signals, determining sensor information, providing user feedback (e.g., through user interface 120), querying devices for operational parameters, selecting operational parameters for devices, or performing any of the various operations described herein (e.g., operations performed by logic devices of various devices of system 100).

In addition, a machine-readable medium may be provided for storing non-transitory instructions for loading into and execution by controller 130. In these and other embodiments, controller 130 may be implemented with other components where appropriate, such as volatile memory, non-volatile memory, one or more interfaces, and/or various analog and/or digital components for interfacing with devices of system 100. For example, controller 130 may be adapted to store sensor signals, sensor information, parameters for coordinate frame transformations, calibration parameters, sets of calibration points, performance contours, and/or other operational parameters, over time, for example, and provide such stored data to a user using user interface 120. Controller 130 may also store threshold torque levels required to disengage an autopilot drive of autopilot system 180 and/or a force or load profile designating sensor signals for forces applied by a user or an external factor or source (e.g., water with a rudder); however, such data may also or instead be stored by autopilot system 180 and used with additional controllers.

In some embodiments, controller 130 may be integrated with one or more user interfaces (e.g., user interface 120), and, in one embodiment, may share a communication module or modules. As noted herein, controller 130 may be adapted to execute one or more control loops for actuated device control, steering control (e.g., using steering sensor/actuator 150) and/or performing other various operations of mobile structure 101 and/or system 100. In some embodiments, a control loop may include processing sensor signals and/or sensor information in order to control one or more operations of mobile structure 101 and/or system 100.

Orientation sensor 140 may be implemented as one or more of a compass, float, accelerometer, and/or other device capable of measuring an orientation of mobile structure 101 (e.g., magnitude and direction of roll, pitch, and/or yaw, relative to one or more reference orientations such as gravity and/or Magnetic North) and providing such measurements as sensor signals that may be communicated to various devices of system 100. In some embodiments, orientation sensor 140 may be adapted to provide heading measurements for mobile structure 101. In other embodiments, orientation sensor 140 may be adapted to provide roll, pitch, and/or yaw rates for mobile structure 101 (e.g., using a time series of orientation measurements). Orientation sensor 140 may be positioned and/or adapted to make orientation measurements in relation to a particular coordinate frame of mobile structure 101, for example.

Speed sensor 142 may be implemented as an electronic pitot tube, metered gear or wheel, water speed sensor, and/or other device capable of measuring a linear speed of mobile structure 101 (e.g., in a surrounding medium and/or aligned with a longitudinal axis of mobile structure 101) and providing such measurements as sensor signals that may be communicated to various devices of system 100. Wind sensor 143 may be implemented as one or more electronic pitot tubes, weather vanes, anemometers, and/or other devices capable of measuring a relative and/or absolute wind velocity (e.g., direction and/or magnitude) for mobile structure 101 (e.g., local to mobile structure 101) and providing such measurements as sensor signals that may be communicated to various devices of system 100. Wind sensor 143 may be positioned and/or adapted to make such measurements in relation to a particular coordinate frame of mobile structure 101, for example.

Gyroscope/accelerometer 144 may be implemented as one or more electronic sextants, semiconductor devices, integrated chips, accelerometer sensors, accelerometer sensor systems, or other devices capable of measuring angular velocities/accelerations and/or linear accelerations (e.g., direction and magnitude) of mobile structure 101 and providing such measurements as sensor signals that may be communicated to other devices of system 100 (e.g., user interface 120, controller 130). Gyroscope/accelerometer 144 may be positioned and/or adapted to make such measurements in relation to a particular coordinate frame of mobile structure 101, for example.

GNSS 146 may be implemented as a global positioning satellite receiver and/or other device capable of determining absolute and/or relative position of mobile structure 101 based on wireless signals received from space-born and/or terrestrial sources, for example, and capable of providing such measurements as sensor signals that may be communicated to various devices of system 100. In some embodiments, GNSS 146 may be adapted to determine a velocity, speed, yaw, and/or yaw rate of mobile structure 101 (e.g., using a time series of position measurements), such as an absolute velocity and/or a yaw component of an angular velocity of mobile structure 101. In various embodiments, one or more logic devices of system 100 may be adapted to determine a calculated speed of mobile structure 101 and/or a computed yaw component of the angular velocity from such sensor information.

Steering sensor/actuator 150 may be adapted to physically adjust a heading of mobile structure 101 according to one or more control signals and/or user inputs provided by a logic device of system 100, such as controller 130. Steering sensor/actuator 150 may include one or more steering mechanisms, actuators, and control surfaces (e.g., a rudder or other type of steering mechanism) of mobile structure 101 and may be adapted to physically adjust the control surfaces to a variety of positive and/or negative steering angles/positions. Steering mechanisms of steering sensor/actuator 150 may include a steering column, a steering wheel, a steering wheel hub, and the like, which may be linked or connected to a rudder arm or a rudder quadrant for control of mobile structure 101.

Propulsion system 170 may be implemented as a propeller, turbine, or other thrust-based propulsion system, a mechanical wheeled and/or tracked propulsion system, a sailing propulsion system, and/or other types of propulsion systems that can be used to provide motive force to mobile structure 101. For example, in some embodiments, propulsion system 170 may be implemented as a sailing propulsion system including one or more masts, booms, sails, and/or one or more sensors and/or actuators adapted to sense and/or adjust a boom angle, a sail trim, and/or other operational parameters of a sailing propulsion system, as described herein.

Autopilot system 180 may be implemented as an autopilot drive or other autopilot controller and/or device that can be used to automatically control and operate mobile structure 101, as well various sensors, electromechanical systems, and/or other devices configured to engage and disengage the autopilot drive based on user inputs provided to steering sensor/actuator 150 and/or user interface 120. For example, autopilot system 180 may be implemented as an autopilot controller and drive that may steer mobile structure 101 on a course, route, and/or heading. In various embodiments, autopilot system 180 and/or elements of autopilot system 180, including an autopilot drive and/or release mechanism, may be included within, shared by, and/or integrated with user interface 120, controller 130, steering sensor/actuator 150, and/or propulsion system 170, as described herein. For example, in some embodiments, the autopilot drive may function as a software component executed by controller 130 according to parameters accessible via user interface 120 and used to control steering sensor/actuator 150 of mobile structure 101 via sensor signals generated by controller 130 and/or user interface 120 and provided to steering sensor/actuator 150 and/or propulsion system 170. In other embodiments, an autopilot drive of autopilot system 180 may be incorporated within and/or integrated with steering sensor/actuator 150.

Autopilot system 180 may further be implemented having an autopilot drive release device or mechanism that can be used to disengage, deactivate, or release an autopilot drive and provide a user with manual control of mobile structure 101 through steering sensor/actuator 150. In some embodiments, the autopilot drive release device may be implemented in one or more forms to release the autopilot drive based on detected forces applied to a steering mechanism, such as a torque applied to a steering wheel of user interface 120 and/or steering sensor/actuator 150. In other embodiments, a force detected as a user input load to the steering wheel when connected between the autopilot drive and a rudder arm or rudder quadrant may be used to disengage the autopilot drive. The autopilot drive release device may be specifically configured for mobile structure 101, such as to adjust for size and/or structure parameters, capacities, and components of mobile structure 101. For example, taper adapters and/or variants of a housing, structure, or sensor of the autopilot drive release device may be adjusted for different configurations of mobile structure 101.

In some embodiments, an autopilot drive release device may correspond to a portion of a steering wheel hub for a steering wheel of the steering sensor/actuator 150. For example, the autopilot drive release device may be mounted on, within, or over the steering wheel hub or a portion of the steering wheel hub. The autopilot drive release device may sense one or more signals from a force or torque applied to a steering mechanism, such as the steering wheel or other steering component of steering sensor/actuator 150 used by a user for manual operation of mobile structure 101. This may be done using a torque sensing unit (TSU) having a component, disk, or object fixed to a steering shaft and/or steering wheel with a strain gauge or other sensor capable of detecting forces, pressures, strains, torques, and the like. When torque is applied to the steering wheel by a user, the strain gauge may detect a force applied from the torque and determine that the force exceeds a threshold torque level or value applied to the steering wheel. This indicates that the autopilot drive should be disengaged for manual control. A control unit, such as a printed circuit board or other logic device, may determine that the force exceeds the threshold level. The control unit may use a wireless connection, signaling, and/or communications to communicate with user interface 120, controller 130, and/or steering sensor/actuator 150 to disengage the autopilot drive. In some embodiments, release or disengagement of the autopilot drive may be a release or disengagement of an autopilot drive clutch, thereby disengaging the autopilot drive from steering sensor/actuator 150.

In other embodiments, the autopilot drive release device of autopilot module 180 may be mounted or located between the autopilot drive unit or mechanism and a rudder arm or a rudder quadrant. The autopilot drive release device may include a control unit, a strain gauge, and a load pin or load cell used with the strain gauge to measure a force that is applied between a steering mechanism of steering sensor/actuator 150 and a rudder arm, rudder, and/or rudder quadrant. When a torque is applied to a steering wheel of steering sensor/actuator 150 (e.g., when a user manually turns the steering wheel), the load pin or cell detects the applied force. The control unit may identify the torque as a user input load and not an input load from an external source, such as a water load or force applied to a rudder and determine that the autopilot drive should be disengaged. The control unit may use a wireless connection, signaling, and/or communications to communicate with user interface 120, controller 130, and/or steering sensor/actuator 150 to disengage the autopilot drive. In some embodiments, release or disengagement of the autopilot drive may be a release or disengagement of an autopilot drive clutch, thereby disengaging the autopilot drive from steering sensor/actuator 150.

Other modules 182 may include other and/or additional sensors, actuators, communications modules/nodes, and/or user interface devices used to provide additional environmental information of mobile structure 101, for example. In some embodiments, the other modules 182 may include a humidity sensor, a wind and/or water temperature sensor, a barometer, a radar system, a visible spectrum camera, an infrared camera, a sonar system, and/or other environmental sensors providing measurements and/or other sensor signals that can be displayed to a user and/or used by other devices of system 100 (e.g., controller 130) to provide operational control of mobile structure 101 that compensates for environmental conditions, such as water surface conditions/chop, water temperature, water depth, swell speed, amplitude, and/or direction, and/or an object in a path of mobile structure 101, for example. In some embodiments, other modules 182 may include one or more actuated devices (e.g., spotlights, cameras, radars, sonars, and/or other actuated devices) coupled to mobile structure 101, where each actuated device includes one or more actuators adapted to adjust an orientation of the device, relative to mobile structure 101, in response to one or more control signals (e.g., provided by controller 130).

In general, each of the elements of system 100 may be implemented with any appropriate logic device (e.g., processing device, microcontroller, processor, application specific integrated circuit (ASIC), field programmable gate array (FPGA), memory storage device, memory reader, or other device or combinations of devices) that may be adapted to execute, store, and/or receive appropriate instructions, such as software instructions implementing a method for providing a sailing user interface, for example, or for transmitting and/or receiving communications, such as sensor signals, sensor information, and/or control signals, between one or more devices of system 100. In one embodiment, such method may include instructions to receive a heading, orientation, angular velocity, acceleration, wind velocity, and/or speed of mobile structure 101 from various sensors, to determine a wind direction from the sensor signals, and/or to render a sail chart for mobile structure 101, for example, as described herein. In a further embodiment, such method may include instructions for forming one or more communication links between various devices of system 100.

In addition, one or more machine readable mediums may be provided for storing non-transitory instructions for loading into and execution by any logic device implemented with one or more of the devices of system 100. In these and other embodiments, the logic devices may be implemented with other components where appropriate, such as volatile memory, non-volatile memory, and/or one or more interfaces (e.g., inter-integrated circuit (I2C) interfaces, mobile industry processor interfaces (MIPI), joint test action group (JTAG) interfaces (e.g., IEEE 1149.1 standard test access port and boundary-scan architecture), and/or other interfaces, such as an interface for one or more antennas, or an interface for a particular type of sensor).

Each of the elements of system 100 may be implemented with one or more amplifiers, modulators, phase adjusters, beamforming components, digital to analog converters (DACs), analog to digital converters (ADCs), various interfaces, antennas, and/or other analog and/or digital components enabling each of the devices of system 100 to transmit and/or receive signals, for example, in order to facilitate wired and/or wireless communications between one or more devices of system 100. Such components may be integrated with a corresponding element of system 100, for example. In some embodiments, the same or similar components may be used to perform one or more sensor measurements, as described herein. Sensor signals, control signals, and other signals may be communicated among elements of system 100 using a variety of wired and/or wireless communication techniques, including voltage signaling, Ethernet, WiFi, Bluetooth, Zigbee, Xbee, Micronet, or other medium and/or short range wired and/or wireless networking protocols and/or implementations, for example. In such embodiments, each element of system 100 may include one or more modules supporting wired, wireless, and/or a combination of wired and wireless communication techniques.

In some embodiments, various elements or portions of elements of system 100 may be integrated with each other, for example, or may be integrated onto a single printed circuit board (PCB) to reduce system complexity, manufacturing costs, power requirements, and/or timing errors between the various measurements. For example, orientation sensor 140, gyroscope/accelerometer 144, controller 130, and/or autopilot system 180 may be configured to share one or more components, such as a memory, a logic device, a communications module, and/or other components, and such sharing may act to reduce and/or substantially eliminate such timing errors while reducing overall system complexity and/or cost.

Each element of system 100 may include one or more batteries or other electrical power storage devices, for example, and may include one or more solar cells (e.g., a photo voltaic panel or cell) or other electrical power generating devices (e.g., a wind or water-powered turbine, or a generator producing electrical power from motion of one or more elements of system 100). In some embodiments, one or more of the devices may be powered by a power source for mobile structure 101, using one or more power leads. The power source may be connected to one or more of the device and/or modules in system 100 by a wired cable connection, which may utilize a slipring when connected to a moveable or rotatable object (e.g., a steering wheel of steering sensor/actuator 150). Such power systems may be used to power autopilot system 180, such as an autopilot drive release device.

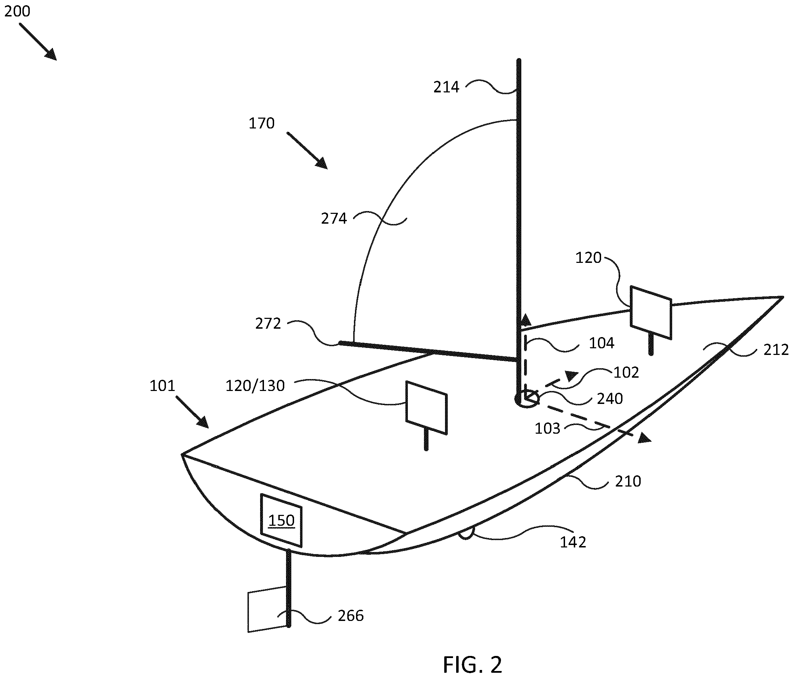

Fig. 2 illustrates a diagram of an autopilot drive release system 200 in accordance with an embodiment of the disclosure. In the embodiment shown in Fig. 2, system 200 may be configured to provide autopilot drive release for mobile structure 101, similar to system 100 of Fig. 1, where mobile structure 101 is implemented as a watercraft. For example, system 200 may include sensor cluster 240 (e.g., orientation sensor 140, wind sensor 143, gyroscope/accelerometer 144, and/or GNSS 146), user interface/controller 120/130, steering sensor/actuator 150, autopilot system 180, and various other sensors and/or actuators. In the embodiment illustrated by Fig. 2, mobile structure 101 is implemented as a sailboat including a hull 210, a deck 212, a mast/sensor mount 214, a rudder 266, and a sail system 170. In other embodiments, hull 210, deck 212, mast/sensor mount 214, rudder 266, and sail system 170 may correspond to attributes of another type of vehicle, robot, or drone, for example, such as an undercarriage, a passenger compartment, an engine/engine compartment, a trunk, a roof, a steering mechanism, and/or other portions of a vehicle.

As depicted in Fig. 2, sail system 170 of mobile structure 101 includes sail 274 coupled to mast 214 and boom 272. Other embodiments of sail system 170 may include multiple sails, masts, and/or booms in various configurations, such as configurations including one or more jibs, spinnakers, mainsails, headsails, and/or various multi-mast configurations. In some embodiments, sail system 170 may be implemented with various actuators to adjust various aspects of sail system 170, such as a boom angle for boom 272 or a sail trim for sail 274. For example, a portion of either mast 214 or boom 272 may be configured to rotate under power from a corresponding mast or boom actuator (e.g., embedded within mast 214 and/or boom 272) and partially or fully furl sail 274. In one embodiment, user interface/controller 120/130 may be configured to determine an estimated maximum speed for mobile structure 101 for a particular orientation (e.g., heading/yaw, roll, and/or pitch) of mobile structure 101 relative to a current wind direction, for example. In such embodiment, user interface/controller 120/130 may be configured to steer mobile structure 101 towards the corresponding heading using steering sensor/actuator 150 and/or to adjust a roll and/or pitch of mobile structure 101, using actuators to adjust a boom angle of boom 272 and/or a furl state of sail 274 for example, to conform mobile structure 101 to the corresponding particular roll and/or pitch to help reach the estimated maximum speed. Further, autopilot system 180 (e.g., integrated with user interface/controller 120/130 and/or steering sensor/actuator 150) may be configured to autopilot mobile structure 101 toward a corresponding heading, as discussed herein, which may be disengaged or deactivated based on user inputs provided to a steering mechanism of system 200.

In one embodiment, user interfaces 120 may be mounted to mobile structure 101 substantially on deck 212 and/or mast/sensor mount 214. Such mounts may be fixed, for example, or may include gimbals and other leveling mechanisms/actuators so that a display of user interfaces 120 stays substantially level with respect to a horizon and/or a "down" vector (e.g., to mimic typical user head motion/orientation). In another embodiment, at least one of user interfaces 120 may be located in proximity to mobile structure 101 and be mobile throughout a user level (e.g., deck 212) of mobile structure 101. For example, user interface 120 may be implemented with a lanyard and/or other type of strap and/or attachment device and be physically coupled to a user of mobile structure 101 so as to be in proximity to mobile structure 101. User interface 120 may also be implemented as one or more types of wearable user interfaces, such as augmented reality glasses/headsets, head up displays, ear/headphones and/or microphones (e.g., for audible user interaction), vibration motors/modules and/or other tactile interfaces, and/or other types of wearable or personal user interfaces. In various embodiments, user interfaces 120 may be implemented with a relatively thin display that is integrated into a PCB of the corresponding user interface in order to reduce size, weight, housing complexity, and/or manufacturing costs.

As shown in Fig. 2, in some embodiments, speed sensor 142 may be mounted to a portion of mobile structure 101, such as to hull 210, and be adapted to measure a relative water speed. In some embodiments, speed sensor 142 may be adapted to provide a thin profile to reduce and/or avoid water drag. In various embodiments, speed sensor 142 may be mounted to a portion of mobile structure 101 that is substantially outside easy operational accessibility. Speed sensor 142 may include one or more batteries and/or other electrical power storage devices, for example, and may include one or more water-powered turbines to generate electrical power. In other embodiments, speed sensor 142 may be powered by a power source for mobile structure 101, for example, using one or more power leads penetrating hull 210.

In the embodiment illustrated by Fig. 2, mobile structure 101 includes direction/longitudinal axis 102, direction/lateral axis 103, and direction/vertical axis 104 meeting approximately at mast/sensor mount 214 (e.g., near a center of gravity of mobile structure 101). In one embodiment, the various axes may define a coordinate frame of mobile structure 101 and/or sensor cluster 240. Each sensor adapted to measure an orientation and/or direction (e.g., headings, velocities, accelerations, or other states including a directional component) may be implemented with a mount, actuators, and/or servos that can be used to align a coordinate frame of the sensor with a coordinate frame of any element of system 200 and/or mobile structure 101. Each element of system 200 may be located at positions different from those depicted in Fig. 2. Each device of system 200 may include one or more batteries or other electrical power storage devices, for example, and may include one or more solar cells or other electrical power generating devices. In some embodiments, one or more of the devices may be powered by a power source for mobile structure 101. As noted herein, each element of system 200 may be implemented with an antenna, a logic device, and/or other analog and/or digital components enabling that element to provide, receive, and process sensor signals and interface or communicate with one or more devices of system 200. Further, a logic device of that element may be adapted to perform any of the methods described herein.

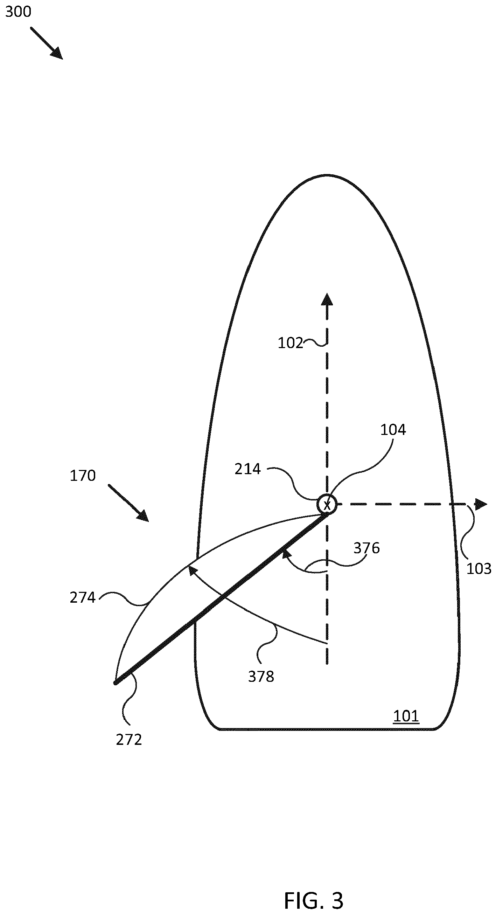

Fig. 3 illustrates a diagram of an autopilot drive release system 300 in accordance with an embodiment of the disclosure. In the embodiment shown in Fig. 3, system 300 may be configured to provide autopilot drive release for mobile structure 101, similar to systems 100 and 200 of Figs. 1-2, where mobile structure 101 is implemented as a sailboat. For example, system 300 may include various sensors and/or actuators of systems 100 and/or 200. In the embodiment illustrated by Fig. 3, mobile structure 101 is implemented as a sailboat including sail system 170. Similar to Fig. 2, sail system 170 of Fig. 3 includes sail 274 coupled to mast 214 and boom 272. Also shown are boom angle 376, which may be adjusted by a boom angle actuator integrated with mast 214 and/or boom 272, and sail trim 378. In some embodiments, sail trim 378 may correspond to the angle between longitudinal axis 102 and a tangent plane of sail 274, where the tangent plane of sail 274 roughly corresponds to aggregate moment of sail 274 taking into account any billowing or other shape of sail 274 due to the competing forces of wind and the tension between sail 274, boom 272, and mast 214. More generally, sail trim 378 may correspond to the shape and angle of sail 274 relative to the present wind direction.

In some embodiments, sail trim 378 may be adjusted by one or more actuators configured to incrementally furl and/or unfurl sail 274, to increase and/or decrease tension between sail 274 and mast 214 and/or boom 272, and/or to adjust boom angle 376. In various embodiments, sail trim 378 may be used to adjust a pitch, roll, and/or speed/acceleration of mobile structure 101 separately from adjusting a heading/steering angle of mobile structure 101. For example, user interface/controller 120/130 may be configured adjust sail trim 378 to adjust a roll and/or pitch of mobile structure 101, using actuators to adjust a boom angle of boom 272 and/or a furl state of sail 274 for example, to conform mobile structure 101 to an orientation corresponding to an autopilot drive of autopilot system 180 and/or a manual steering input that terminates an autopilot drive using steering sensor/actuator 150.

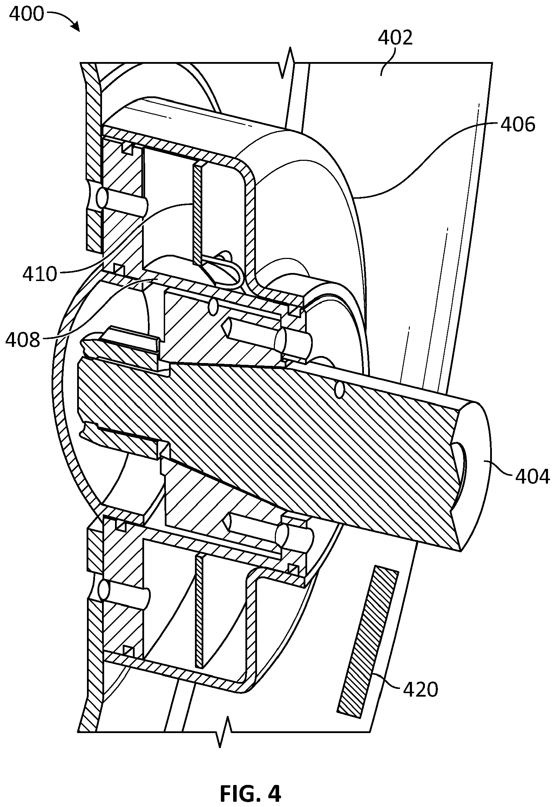

Fig. 4 illustrates a diagram of a steering mechanism 400 including an autopilot drive release in accordance with an embodiment of the disclosure. In the embodiment shown in Fig. 4, steering mechanism 400 may be configured to control an orientation of a rudder or propulsion system for mobile structure 101, similar to systems 100, 200, and 300 of Figs. 1-3. For example, steering mechanism 400 may include various sensors and/or actuators of systems 100, 200, and/or 300. In the embodiment illustrated by Fig. 4, steering mechanism 400 is implemented in a motorized ship or sailboat, such as one having steering sensor/actuator 150, however, other mobile structures may have similar mechanisms for steering and autopilot drive disengagement.

Steering mechanism 400 may be included in, as a part of, and/or electrically, hydraulically, mechanically, and/or otherwise coupled to a portion of user interface 120 and/or steering sensor/actuator 150, such as a steering wheel, steering wheel hub, and/or steering column for mobile structure 101. In this regard, steering mechanism 400 is shown including a steering wheel 402 connected to a steering column portion 404 and having a steering wheel hub 406 that encapsulates additional components used for disengaging an autopilot drive. Within steering wheel hub 406, a steering wheel connector 408 connects steering wheel 402 to steering column portion 404 to allow for manual steering and control of mobile structure 101. Further, steering mechanism 400 may include a direct torque sensor/TSU 410 disposed within and/or integrated with steering wheel hub 406 and configured to sense a torque applied to steering wheel 402, such as when manual control of the mobile structure is performed by a skipper (e.g., during autopiloting of mobile structure 1010 on a course or heading and while an autopilot drive is engaged).

In this regard, TSU 410 may include a plate or other components affixed within steering wheel hub 406 and a strain gauge configured to sense a torque or force when a user is interacting with steering wheel 402. This may occur when steering wheel 402 is turned or rotated (e.g., clockwise or counterclockwise). The applied torque or force may be sensed from interactions between steering wheel connector 408 and TSU 410 or may occur as TSU 410 moves with steering wheel hub 406 during rotation and torquing of steering wheel 402. The resulting force or torque applied to TSU 410 may cause TSU 410 to generate sensor signals and/or data measured and/or detected by circuitry mounted to a PCB and/or a logic device in communication with and/or integrated with TSU 410. In some embodiments, the logic device may correspond to controller 130 and therefore TSU 410 may be in wired or wireless communication with controller 130. In other embodiments, the logic device may be an additional logic device integrated or connected with TSU 410.

As the applied torque or force is detected, the logic device connected with TSU 410 may measure the corresponding torque or force and determine whether the measured torque or force meets or exceeds a required level or amount. The level or amount may correspond to a threshold level or amount that indicates a user input load is being applied to steering mechanism 400 (e.g., via steering wheel 402) in order to perform manual input while an autopilot drive is on an automated heading. If the required threshold torque level is met or exceeded, the logic device may disengage or deactivate the autopilot drive. In some embodiments, disengaging the autopilot drive may be performed by generating and providing a control signal to the autopilot drive (e.g., through a wired or wireless communication channel, such as WiFi). In other embodiments, the logic device may instruct another component executing the autopilot drive (e.g., user interface 120, controller 130, and/or steering sensor/actuator 150) to disengage the autopilot drive, release a clutch for the autopilot drive, or the like.

Steering mechanism 400 may further include a power unit and/or battery to power TSU 410. The power unit may be wired with a wired cable connection and a slipring to prevent damage and allow use during movements, turning, and torquing of steering mechanism 400 (e.g., when using steering wheel 402). The power unit may also include a photo voltaic panel, cell, or the like, such as mounted to a middle of steering wheel 402 and/or steering wheel hub 406. Further, TSU 410 within steering wheel hub 406 may be sealed and/or made rugged in order to prevent damage and make suitable for certain environments, such as marine environments.

In some embodiments, steering mechanism may be implemented with a touch sensor 420, such as a capacitive, inductive, and/or pressure activated touch sensor integrated with a grip portion of steering wheel 402. Touch sensor 420 may be configured to provide corresponding touch sensor data to a logic device of TSU 410 and/or of any element of systems 100, 200, and/or 300, for example, and such logic device (e.g., controller 130) may be configured to determine a user/skipper is in manual contact with steering wheel 402 based, at least in part, on such touch sensor data. In such embodiments, systems 100, 200, and/or 300 may be configured to differentiate, based on a detected manual contact with steering wheel 402, torque and/or force affirmatively applied by a user to steering wheel 402 and/or other elements of autopilot system 180 from friction forces and/or backfed torques and/or forces applied by a medium (e.g., wind and/or water) to and/or fed back through elements of autopilot system 180, steering sensor/actuator 150, propulsion system 170, and/or other elements of systems 100, 200, and/or 300.

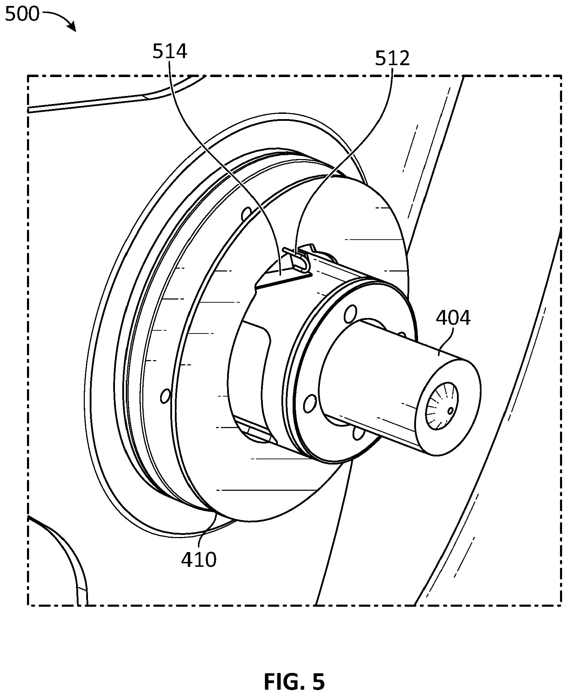

Fig. 5 illustrates a diagram of a steering mechanism 500 including an autopilot drive release in accordance with an embodiment of the disclosure. In the embodiment shown in Fig. 5, steering mechanism 500 may be configured to control an orientation of a rudder or propulsion system for mobile structure 101, similar to systems 100, 200, and 300 of Figs. 1-3 and steering mechanism 400 of Fig. 4. For example, steering mechanism 500 may include various sensors and/or actuators of systems 100, 200, and/or 300. In some embodiments, steering mechanism 500 may correspond to a different view and/or embodiment of steering mechanism 400 of Fig. 4. In the embodiment illustrated by Fig. 5, steering mechanism 500 is implemented in a motorboat or sailboat, such as one having steering sensor/actuator 150; however, other mobile structures may be implemented with similar mechanisms for autopilot disengagement.

Steering mechanism 500 may be included in, as a part of, and/or electrically, hydraulically, mechanically, and/or otherwise coupled to a portion of user interface 120 and/or steering sensor/actuator 150, such as a steering wheel, steering wheel hub, and/or steering column for mobile structure 101. In this regard, steering mechanism 500 is shown including steering column portion 404 interacting with TSU 410, which may include a strain gauge 512 with a gauge component 514 configured to measure and/or detect a torque or force applied to strain gauge 512 when a corresponding steering wheel or other portion of steering mechanism 500 is manually manipulated a skipper or pilot. Strain gauge 512 may be configured to measure and/or detect the torque or force when a rotation of steering wheel 402 and/or TSU 410 causes a torque, pressure, load, tension, weight, or other force to be applied to strain gauge 512 (e.g., through gauge component 514 and/or a portion of a plate of TSU 410 when a corresponding steering wheel is torqued or rotated).

Based on the torque or force detected using strain gauge 512, a corresponding sensor signal may be provided to a communicatively coupled logic device, which may determine if the torque meets or exceeds a corresponding threshold torque level. When meeting or exceeding the threshold torque level, the sensor signals may be used by the logic device to disengage and/or send additional communication signaling causing a disengagement of an autopilot drive of a mobile structure, as described herein.

In additional embodiments, an indirect TSU may be fitted between an autopilot drive and a rudder arm/quadrant. For example, an indirect TSU may be implemented as and/or include a load pin in shear or a load cell in axial tension and compression and integrated with steering sensor/actuator 150. A strain gauge disposed within the indirect TSU may sense the force of the autopilot drive operating the rudder and send a corresponding signal to a logic device, as described herein. In such embodiments, the force would be an indirect measure of the torque or force applied manually by a pilot to steering mechanism 400 or 500. The logic device (e.g., controller 130) may be configured to release an autopilot drive clutch thereby disengaging it from the steering system when the force operating the rudder is different than the expected force applied by the autopilot drive.

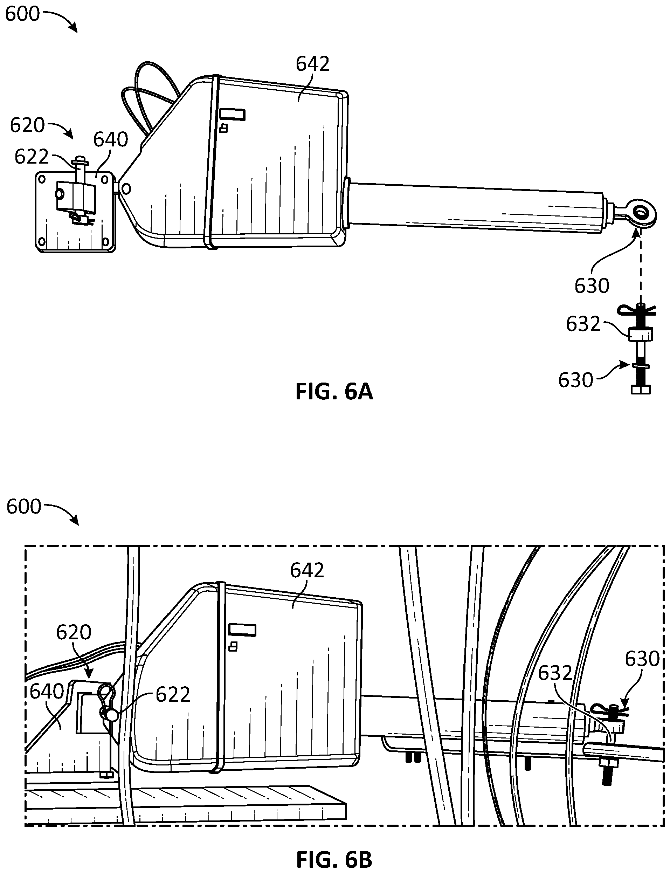

For example, Figs. 6A-B illustrates diagrams of steering mechanism 600 with an autopilot drive release in accordance with an embodiment of the disclosure. In particular, Fig. 6A shows steering mechanism 600 implemented as a motorized rudder quadrant and presented in a preinstalled state, and Fig. 6A shows the same steering mechanism 600 installed in a watercraft. As shown in Figs. 6A-B, steering mechanism 600 may include one or multiple indirect TSUs 620, 630 each including respective load pins or load cells 622, 632 disposed between a mounting post 640 for steering mechanism 600 and an actuator 642 of steering mechanism 600 and/or between actuator 642 of steering mechanism 600 and a rudder or control plane for mobile structure 101, as shown. In some embodiments, load pins/cells 622 and 632 may be oriented orthogonally relative to each other (e.g., horizontally and vertically), which can provide different loading characteristics while navigating mobile structure 101. TSU 620 may be substantially non-moving relative to a hull or other substructure of mobile structure 101, which may facilitate easier and more reliable long-term wiring of TSU 620, but which may provide force measurements that include the inertia of steering mechanism 600. TSU 630 may be more difficult to wire, due to its movement during navigation of mobile structure 101, but its force measurements would not include the inertia of steering mechanism 600 to the extent measured by TSU 620.

In various embodiments, either or both a direct or indirect TSU device (e.g., implemented as steering mechanisms 400, 500, 600, and/or 602 of Figs. 4-6B) may be calibrated to suit the steering mechanism of any vessel so that a corresponding autopilot drive would not disengage in normal use. In particular embodiments, controller 130 may be configured to identify and/or differentiate skipper inputs from water force loading backfed through elements of steering sensor/actuator 150, propulsion system 170, and/or other elements of systems 100, 200, and/or 300, and disengage the autopilot drive and/or other elements of autopilot system 180 in response to skipper loads but not in response to water loads. Such differentiation may be implemented as signal processing applied to the sensor signals and/or sensor data generated by any of the strain gauges described herein and/or other force sensors integrated with a direct or indirect TSU, such as signal processing configured to characterize load profiles and classify load profiles into 'skipper' or 'water' loads. In some embodiments, the signal processing may be implemented as an adaptive algorithm or a machine learning algorithm applied to TSU data for a particular vessel that is accumulated over time. As with the direct TSU, the indirect TSU and/or accompanying sensors and/or circuitry may be sealed against the environment in order to make it suitable for marine environments.

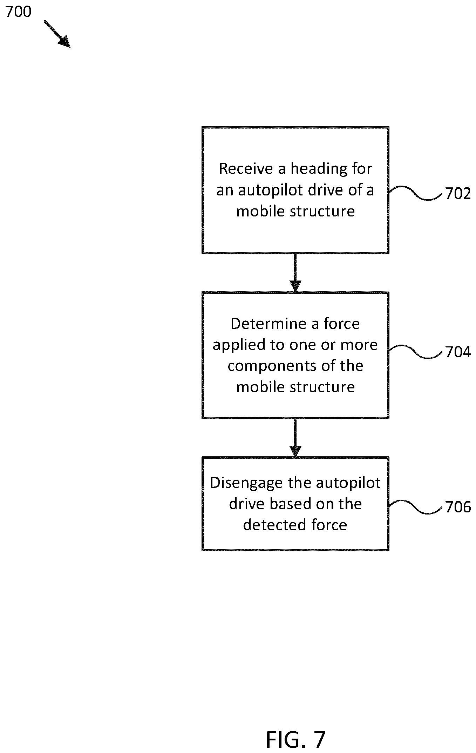

Fig. 7 illustrates flow diagram 700 of various operations to provide an autopilot drive release based on steering mechanism torque in accordance with embodiments of the disclosure. In some embodiments, the operations of Fig. 7 may be implemented as software instructions executed by one or more logic devices associated with corresponding electronic devices and/or sensors of systems 100, 200, and/or 300 of Figs. 1-3, and/or the components and sensors of steering mechanisms 400, 500, 600, and 602 of Figs. 4-6B. More generally, the operations of Fig. 7 may be implemented with any combination of software instructions and/or electronic hardware (e.g., inductors, capacitors, amplifiers, or other analog and/or digital components).

It should be appreciated that any step, sub-step, sub-process, or block of process 700 may be performed in an order or arrangement different from the embodiments illustrated by Fig. 7. For example, in other embodiments, one or more blocks may be omitted from the various processes, and blocks from one process may be included in another process. Furthermore, block inputs, block outputs, various sensor signals, sensor information, calibration parameters, and/or other operational parameters may be stored to one or more memories of systems 100, 200, and/or 300 prior to moving to a following portion of a corresponding process. Although process 700 is described with reference to Figs 1-6B, process 700 may be performed by other systems and mechanism and including a different selection of electronic devices, sensors, mobile structures, mobile structure attributes, steering mechanisms, and/or autopilot drives.

Process 700 represents a method for providing an autopilot drive release based on steering mechanism torque (e.g., direct or indirect torque) in accordance with embodiments of the disclosure. At the initiation of process 700, various system parameters may be populated by prior execution of a process similar to process 700, for example, or may be initialized to zero and/or one or more values corresponding to typical, stored, and/or learned values derived from past operation of process 700, as described herein. Furthermore, such system parameters, including user selections of various autopilot options (heading course, route, disengagement torque or force requirements, threshold level required to disengage an autopilot drive, load profiles for user input loads and water loads) may be populated by prior and/or contemporaneous user input.

In block 702, a logic device receives a heading for an autopilot drive of a mobile structure. For example, controller 130 of system 100 may be configured to receive a heading and/or orientation from an autopilot drive of autopilot system 180. In other embodiments, controller 130 may be configured to receive an autopilot course or an autopilot engagement that indicates an autopilot is currently being used with mobile structure 101. Controller 130 may receive the indication of an autopilot drive use from user interface 120 and/or steering sensor/actuator 150 where the autopilot drive may directly engage with such components. In some embodiments, controller 130 may be configured to receive other sensor information in addition to the heading, such as an orientation from orientation sensor 140, a water speed from speed sensor 142, a relative or absolute wind velocity from wind sensor 143, a cross track error (e.g., deviations from a planned route based on position data from GNSS 146 and/or a route designated within autopilot system 180), and/or other sensor information from various sensors of systems 100, 200, and/or 300.

In various embodiments, controller 130 may be configured to receive a time series of positions of mobile structure 101 from GNSS 146, for example, which may include an autopilot heading and/or course determined from the series of positions (e.g., by subtracting one or more prior position measurements from a present position measurement, and/or using other methods to derive a heading and/or speed from a time series of positions). In further embodiments, controller 130 may be adapted to determine the heading and/or speed of mobile structure 101 by interpolating, averaging, filtering, and/or otherwise processing the measured heading and/or speed and/or the derived heading and/or speed. In general, controller 130 may be configured to interpolate, average, filter, and/or otherwise process or stabilize one or more of the measurements prior to proceeding to block 704.

In block 704, a logic device determines a force applied to one or more components of the mobile structure. For example, controller 130 may be configured to monitor and/or detect, such as using an autopilot drive release device, a torque or force applied to the one or more components via steering wheel 402 when a user moves or rotates steering wheel 402 (e.g., applying a torque to steer mobile structure 101).

In one embodiment, a torque of steering wheel 402 may be detected as a torque or force applied to and/or detected using direct TSU 410 and/or strain gauge 512 of direct TSU 410. Strain gauge 512 of direct TSU 410 may be configured to detect torque or force applied via steering wheel 402. For example, strain gauge 512 may change in resistance or capacitance with applied force, such as a torque when steering wheel 402 is rotated. This may be caused by force, pressure, tension, or the like when applied to any portion of TSU 410 and/or gauge component 514.

In other embodiments, indirect TSUs 620 and/or 630 each including load pins/cell 622, 532 in sheer or axial tension and compression with a rudder arm or a rudder quadrant may be used. Where an indirect TSU is used, the indirect TSU may detect a load applied to a rudder arm or rudder quadrant resulting from a torque or movement of steering wheel 402. In this regard, the applied load or force may be applied by a user using steering wheel 402, such as a user input load or applied force to steering wheel 402 in a different direction or heading from an autopilot drive heading. However, external forces (e.g., due to water, air, a surface, or the like) may also apply backfed forces to the indirect TSU, which may require a load profile to distinguish from manually applied loads and forces. In some embodiments, the system may include a touch sensor, and controller 130 may be configured to differentiate manually applied torques and forces from backfed forces based, at least in part, on touch sensor data provided by such touch sensor, as described herein. In other embodiments, controller 130 may be configured to determine one or a series of load profiles based, at least in part, on such touch sensor data, and to differentiate manually applied torques and forces from backfed forces based, at least in part, on the one or series of load profiles.

In block 706, a logic device disengages the autopilot based on the detected force. For example, controller 130 may be configured to cause an autopilot drive of autopilot system 180 to discontinue or disengage use with user interface 120 and/or steering sensor/actuator 150. In further embodiments, controller 130 may send a signal to user interface 120 and/or steering sensor/actuator 150 to end use of an autopilot drive and/or disconnect from an autopilot drive that is providing commands to user interface 120 and/or steering sensor/actuator 150. For example, user interface 120 and/or steering sensor/ actuator 150 may receive commands from an autopilot drive of autopilot system 180, and controller 130 may end such commands or cause user interface 120 and/or steering sensor/actuator 150 to end receipt and usage of the commands for autopiloting mobile structure 101. In other embodiments, disengaging the autopilot may include release of an autopilot clutch that engages the autopilot with steering sensor/actuator 150 for autopilot drive and control.

In some embodiments, controller 130 may end use of the autopilot drive of autopilot system 180 with user interface 120 and/or steering sensor/actuator 150 based on a torque of steering wheel 402. A required threshold torque level may be required to be met or exceeded in order to disengage and/or disable an autopilot drive. The required threshold torque level may be standard, based on the usage of mobile structure 101 (e.g., watercraft, planes, automobiles, or the like), and/or based on the parameters of mobile structure 101 (e.g., size, weight, dimensions, propulsion system 170, and the like). In other embodiments, a load or force profile may be used to distinguish a difference between user input loads/forces and external and/or incidental loads/forces. The load profile may be generated specifically for mobile structure 101 based on log data for mobile structure 101. For example, the log data may be generated based on user load inputs to the steering mechanism in the past and/or water load inputs (or other external and/or incidental load inputs, for example, from surface, air, and the like) to a rudder arm, rudder quadrant, or other steering and/or movement mechanisms (e.g., wheels, airfoils, and the like).

Embodiments of the present disclosure can thus provide reliable and intuitive disengagement of an autopilot drive when a manual steering is required, such as to avoid collisions. Such embodiments may be used to provide torque-based disengagement of an autopilot drive for a mobile structure and/or systems, devices, and/or sensors coupled to the mobile structure.

Where applicable, various embodiments provided by the present disclosure can be implemented using hardware, software, or combinations of hardware and software. Also, where applicable, the various hardware components and/or software components set forth herein can be combined into composite components comprising software, hardware, and/or both. Where applicable, the various hardware components and/or software components set forth herein can be separated into sub-components comprising software, hardware, or both. In addition, where applicable, it is contemplated that software components can be implemented as hardware components, and vice-versa.

Software in accordance with the present disclosure, such as non-transitory instructions, program code, and/or data, can be stored on one or more non-transitory machine-readable mediums. It is also contemplated that software identified herein can be implemented using one or more general purpose or specific purpose computers and/or computer systems, networked and/or otherwise. Where applicable, the ordering of various steps described herein can be changed, combined into composite steps, and/or separated into sub-steps to provide features described herein.

## Claims

1. A system comprising:
a logic device (130) configured to receive torque sensor data from a torque sensor unit, TSU (410, 620, 630), coupled to a steering mechanism (150, 600) for a mobile structure and to disengage an autopilot drive (180) for the mobile structure, wherein the logic device is configured to:
receive (702) a heading, wind direction, and/or cross track error associated with the autopilot drive (180) for the mobile structure;
determine (704) a force applied to one or more components of the steering mechanism for the mobile structure based, at least in part, on the torque sensor data provided by the TSU; and
disengage (706) the autopilot drive (180) for the mobile structure based, at least in part, on the determined applied force, wherein the autopilot drive is disengaged to allow manual manipulation of the steering mechanism for the mobile structure;
wherein the logic device is configured to determine the force applied to the one or more components by characterizing the torque sensor data and/or corresponding sensor signals as a manual loading applied to the steering mechanism, based on one or more load profiles for the steering mechanism, the autopilot drive, and/or the mobile structure.

2. The system of claim 1, wherein the logic device is configured to:
determine the force applied to the one or more components of the steering mechanism based, at least in part, on a torque applied to the one or more components of the steering mechanism during an engagement of the autopilot drive with the mobile structure;
wherein the TSU comprises a direct TSU comprising a strain gauge (512) coupled to and/or integrated with the one or more components of the steering mechanism.

3. The system of claim 1, further comprising:
an autopilot drive release device configured to receive the torque sensor data and/or corresponding sensor signals provided by the TSU (410, 620, 630) and disengage the autopilot drive (180) from the one or more components of the steering mechanism for the mobile structure and/or the mobile structure, wherein the autopilot drive release device is calibrated for the mobile structure based, at least in part, on the one or more load profiles generated through use of the autopilot drive with the mobile structure, the load profiles being generated based on user load inputs to the steering mechanism and at least one of the following inputs to the steering mechanism:
water load inputs;
air load inputs;
surface load inputs.

4. The system of claim 1, further comprising an autopilot drive release device comprising a portion of a steering wheel hub (406) for the steering mechanism, wherein:
the TSU is disposed at least partially within the steering wheel hub; and
the TSU comprises a strain gauge (512) coupled to and/or integrated with the steering mechanism, wherein the force applied to the steering mechanism comprises a torque applied to the steering mechanism and measured or detected via the strain gauge.

5. The system of claim 4, further comprising:
a power unit for the autopilot drive release device comprising one of a photo voltaic panel in a center of the steering wheel hub or a wired cable connection and slipring; and
a touch sensor (420) integrated with a steering wheel for the mobile structure, wherein the disengaging the autopilot drive for the mobile structure is based, at least in part, on the determined applied force and touch sensor data provided by the touch sensor.

6. The system of claim 1, wherein:
the TSU comprises an indirect TSU coupled to a rudder arm or a rudder quadrant of the mobile structure; and
the indirect TSU comprises one of a load pin in sheer (622,532) or a load cell (622,532) in axial tension and compression with the one of the rudder arm or the rudder quadrant, wherein the torque sensor data provided by the indirect TSU is based, at least in part, on sheer, tension, and/or compression sensor data and/or signals provided by the load pin or load cell.

7. The system of claim 4, wherein the one or more load profiles are generated based on at least one of the following inputs to the steering mechanism:
water load inputs;
air load inputs.

8. The system of claim 6, wherein the logic device is configured to:
generate the one or more load profiles based, at least in part, on manual loading applied to the steering mechanism and water loading backfed to or through the rudder arm or the rudder quadrant.

9. A method comprising:
receiving (702) a heading, wind direction, and/or cross track error associated with an autopilot drive (180) for a mobile structure;
determining (704) a force applied to one or more components of a steering mechanism for the mobile structure based, at least in part, on torque sensor data provided by a torque sensor unit, TSU; and
disengaging (706) the autopilot drive for the mobile structure based, at least in part, on the determined applied force, wherein the autopilot drive is disengaged to allow manual manipulation of the steering mechanism for the mobile structure;
wherein determining the force applied to the one or more components comprises characterizing the torque sensor data and/or corresponding sensor signals as a manual loading applied to the steering mechanism, based on one or more load profiles for the steering mechanism, the autopilot drive, and/or the mobile structure.

10. The method of claim 9, wherein the determining the one or more sensor signals comprises:
determining the force applied to the one or more components of the steering mechanism based, at least in part, on a torque applied to the one or more components of the steering mechanism during an engagement of the autopilot drive with the mobile structure;
wherein the TSU comprises a direct TSU comprising a strain gauge (512) coupled to and/or integrated with the one or more components of the steering mechanism.

11. The method of claim 9, further comprising:
receiving, by an autopilot drive release device, the torque sensor data and/or corresponding sensor signals provided by the TSU, wherein the autopilot drive release device is calibrated for the mobile structure based, at least in part, on the one or more load profiles generated through use of the autopilot drive with the mobile structure.

12. The method of claim 9, further comprising receiving, by an autopilot drive release device, the torque sensor data and/or corresponding sensor signals provided by the TSU, wherein:
the TSU is disposed at least partially within the steering wheel hub; and
the TSU comprises a strain gauge coupled to and/or integrated with the steering mechanism, wherein the force applied to the steering mechanism comprises a torque applied to the steering mechanism and measured or detected via the strain gauge.

13. The method of claim 12, wherein:
the autopilot drive release device is mounted on a steering shaft of the steering mechanism and the steering wheel hub fixes the autopilot drive release device on the steering shaft.

14. The method of claim 12, wherein the determining the force applied to the one or more components comprises:
receiving the torque sensor data and/or corresponding sensor signals generated by the strain gauge from a second logic device of the autopilot drive release device via a wireless communication channel, wherein the second logic device is configured to measure the torque via the strain gauge and compare the measured torque to a threshold torque level.

15. The method of claim 12, wherein:
the autopilot drive release device comprises a power unit including one of a photo voltaic panel in a center of the steering wheel hub or a wired cable connection and slipring; and
the load profiles are generated based on user load inputs to the steering mechanism and at least one of the following inputs to the steering mechanism:
water load inputs;
air load inputs.

## Patentansprüche

1. Ein System, das Folgendes beinhaltet:
eine Logikvorrichtung (130), die konfiguriert ist, um Drehmomentsensordaten von einer Drehmomentsensoreinheit, TSU, (410, 620, 630) zu empfangen, die mit einem Lenkmechanismus (150, 600) für eine mobile Struktur gekoppelt ist, und um einen Autopilotantrieb (180) für die mobile Struktur auszukuppeln, wobei die Logikvorrichtung für Folgendes konfiguriert ist:
Empfangen (702) eines Kurses, einer Windrichtung und/oder eines Querspurfehlers in Assoziation mit dem Autopilotantrieb (180) für die mobile Struktur;
Bestimmen (704) einer Kraft, die auf eine oder mehrere Komponenten des Lenkmechanismus für die mobile Struktur ausgeübt wird, mindestens teilweise basierend auf den von der TSU bereitgestellten Drehmomentsensordaten; und
Auskuppeln (706) des Autopilotantriebs (180) für die mobile Struktur mindestens teilweise basierend auf der bestimmten ausgeübten Kraft, wobei der Autopilotantrieb ausgekuppelt wird, um eine manuelle Handhabung des Lenkmechanismus für die mobile Struktur zu ermöglichen;
wobei die Logikvorrichtung konfiguriert ist, um die auf die eine oder die mehreren Komponenten ausgeübte Kraft zu bestimmen, indem sie die Drehmomentsensordaten und/oder die entsprechenden Sensorsignale als eine manuelle Belastung kennzeichnet, die auf den Lenkmechanismus basierend auf einem oder mehreren Lastprofilen für den Lenkmechanismus, den Autopilotantrieb und/oder die mobile Struktur ausgeübt wird.

2. System gemäß Anspruch 1, wobei die Logikvorrichtung für Folgendes konfiguriert ist:
Bestimmen der Kraft, die auf die eine oder die mehreren Komponenten des Lenkmechanismus ausgeübt wird, mindestens teilweise basierend auf einem Drehmoment, das auf die eine oder die mehreren Komponenten des Lenkmechanismus während eines Eingriffs des Autopilotantriebs mit der mobilen Struktur ausgeübt wird;
wobei die TSU eine direkte TSU beinhaltet, die einen Dehnungsmesser (512) beinhaltet, der mit dem einen oder den mehreren Komponenten des Lenkmechanismus gekoppelt und/oder in diesen integriert ist.

3. System gemäß Anspruch 1, das ferner Folgendes beinhaltet:
eine Autopilotantriebsfreigabevorrichtung, die konfiguriert ist, um die Drehmomentsensordaten und/oder entsprechende Sensorsignale zu empfangen, die von der TSU (410, 620, 630) bereitgestellt werden, und den Autopilotantrieb (180) von der einen oder den mehreren Komponenten des Lenkmechanismus für die mobile Struktur und/oder die mobile Struktur auszukuppeln, wobei die Autopilotantriebsfreigabevorrichtung für die mobile Struktur mindestens teilweise basierend auf dem einen oder den mehreren Lastprofilen kalibriert ist, die durch die Verwendung des Autopilotantriebs mit der mobilen Struktur erzeugt werden, wobei die Lastprofile basierend auf Benutzerlasteingaben in den Lenkmechanismus und mindestens eine der folgenden Eingaben in den Lenkmechanismus erzeugt werden:
Wasserlast-Eingaben;
Luftlast-Eingaben;
Oberflächenlast-Eingaben.

4. System gemäß Anspruch 1, das ferner eine Autopilotantriebsfreigabevorrichtung beinhaltet, die einen Abschnitt einer Lenkradnabe (406) für den Lenkmechanismus beinhaltet, wobei:
die TSU mindestens teilweise innerhalb der Lenkradnabe angeordnet ist; und
die TSU einen Dehnungsmesser (512) beinhaltet, der mit dem Lenkmechanismus gekoppelt und/oder in diesen integriert ist, wobei die auf den Lenkmechanismus ausgeübte Kraft ein auf den Lenkmechanismus ausgeübtes und über den Dehnungsmesser gemessenes oder erfasstes Drehmoment beinhaltet.

5. System gemäß Anspruch 4, das ferner Folgendes beinhaltet:
eine Stromversorgungseinheit für die Autopilotantriebsfreigabevorrichtung, die entweder eine Fotovoltaikplatte in einer Mitte der Lenkradnabe oder eine verdrahtete Kabelverbindung und einen Schleifring beinhaltet; und
einen Berührungssensor (420), der in ein Lenkrad für die mobile Struktur integriert ist, wobei das Auskuppeln des Autopilotantriebs für die mobile Struktur mindestens teilweise auf der bestimmten ausgeübten Kraft und den Berührungssensordaten basiert, die von dem Berührungssensor bereitgestellt werden.

6. System gemäß Anspruch 1, wobei:
die TSU eine indirekte TSU beinhaltet, die mit einem Ruderarm oder einem Ruderquadranten der mobilen Struktur gekoppelt ist; und
die indirekte TSU eines von einem Lastbolzen in Scherung (622, 532) oder einer Lastzelle (622, 532) in axialer Spannung und Kompression mit einem von dem Ruderarm oder dem Ruderquadranten beinhaltet, wobei die Drehmomentsensordaten, die von der indirekten TSU bereitgestellt werden, mindestens teilweise auf Scherungs-, Spannungs- und/oder Kompressionssensordaten und/oder -signalen basieren, die von dem Lastbolzen oder der Lastzelle bereitgestellt werden.

7. System gemäß Anspruch 4, wobei das eine oder die mehreren Lastprofile basierend mindestens auf einer der folgenden Eingaben in den Lenkmechanismus erzeugt werden:
Wasserlast-Eingaben;
Luftlast-Eingaben.

8. System gemäß Anspruch 6, wobei die Logikvorrichtung für Folgendes konfiguriert ist: Erzeugen des einen oder der mehreren Lastprofile mindestens teilweise basierend auf der auf den Lenkmechanismus ausgeübten manuellen Belastung und der auf den oder durch den Ruderarm oder den Ruderquadranten rückgespeisten Wasserbelastung.

9. Ein Verfahren, das Folgendes beinhaltet:
Empfangen (702) eines Kurses, einer Windrichtung und/oder eines Querspurfehlers in Assoziation mit einem Autopilotantrieb (180) für eine mobile Struktur;
Bestimmen (704) einer Kraft, die auf eine oder mehrere Komponenten eines Lenkmechanismus für die mobile Struktur ausgeübt wird, mindestens teilweise basierend auf von einer Drehmomentsensoreinheit, TSU, bereitgestellten Drehmomentsensordaten; und
Auskuppeln (706) des Autopilotantriebs für die mobile Struktur mindestens teilweise basierend auf der bestimmten ausgeübten Kraft, wobei der Autopilotantrieb ausgekuppelt wird, um eine manuelle Handhabung des Lenkmechanismus für die mobile Struktur zu ermöglichen;
wobei das Bestimmen der auf die eine oder die mehreren Komponenten ausgeübte Kraft das Kennzeichnen der Drehmomentsensordaten und/oder der entsprechenden Sensorsignale als eine manuelle Belastung, die auf den Lenkmechanismus basierend auf einem oder mehreren Lastprofilen für den Lenkmechanismus, den Autopilotantrieb und/oder die mobile Struktur ausgeübt wird, beinhaltet.

10. Verfahren gemäß Anspruch 9, wobei das Bestimmen des einen oder der mehreren Sensorsignale Folgendes beinhaltet:
Bestimmen der Kraft, die auf die eine oder die mehreren Komponenten des Lenkmechanismus ausgeübt wird, mindestens teilweise basierend auf einem Drehmoment, das auf die eine oder die mehreren Komponenten des Lenkmechanismus während eines Eingriffs des Autopilotantriebs mit der mobilen Struktur ausgeübt wird;
wobei die TSU eine direkte TSU beinhaltet, die einen Dehnungsmesser (512) beinhaltet, der mit dem einen oder den mehreren Komponenten des Lenkmechanismus gekoppelt und/oder in diesen integriert ist.

11. Verfahren gemäß Anspruch 9, das ferner Folgendes beinhaltet:
Empfangen, durch eine Autopilotantriebsfreigabevorrichtung, der Drehmomentsensordaten und/oder entsprechender Sensorsignale, die von der TSU bereitgestellt werden, wobei die Autopilotantriebsfreigabevorrichtung für die mobile Struktur mindestens teilweise basierend auf dem einen oder den mehreren Lastprofilen kalibriert ist, die durch die Verwendung des Autopilotantriebs mit der mobilen Struktur erzeugt werden.

12. Verfahren gemäß Anspruch 9, das ferner das Empfangen, durch eine Autopilotantriebsfreigabevorrichtung, der Drehmomentsensordaten und/oder entsprechender Sensorsignale, die von der TSU bereitgestellt werden, beinhaltet, wobei:
die TSU mindestens teilweise innerhalb der Lenkradnabe angeordnet ist; und
die TSU einen Dehnungsmesser beinhaltet, der mit dem Lenkmechanismus gekoppelt und/oder in diesen integriert ist, wobei die auf den Lenkmechanismus ausgeübte Kraft ein auf den Lenkmechanismus ausgeübtes und über den Dehnungsmesser gemessenes oder erfasstes Drehmoment beinhaltet.

13. Verfahren gemäß Anspruch 12, wobei:
die Autopilotantriebsfreigabevorrichtung an einer Lenkwelle des Lenkmechanismus angebracht ist und die Lenkradnabe die Autopilotantriebsfreigabevorrichtung an der Lenkwelle fixiert.

14. Verfahren gemäß Anspruch 12, wobei das Bestimmen der Kraft, die auf die eine oder die mehreren Komponenten ausgeübt wird, Folgendes beinhaltet:
Empfangen der Drehmomentsensordaten und/oder entsprechender Sensorsignale, die von dem Dehnungsmesser erzeugt werden, von einer zweiten Logikvorrichtung der Autopilotantriebsfreigabevorrichtung über einen drahtlosen Kommunikationskanal,
wobei die zweite Logikvorrichtung konfiguriert ist, um das Drehmoment über den Dehnungsmesser zu messen und das gemessene Drehmoment mit einem Drehmomentschwellenwert zu vergleichen.

15. Verfahren gemäß Anspruch 12, wobei:
die Autopilotantriebsfreigabevorrichtung eine Stromversorgungseinheit beinhaltet, die eines von einer Fotovoltaikplatte in einer Mitte der Lenkradnabe oder einer verdrahteten Kabelverbindung und einem Schleifring beinhaltet; und
die Lastprofile basierend auf Benutzerlasteingaben in den Lenkmechanismus und mindestens einer der folgenden Eingaben in den Lenkmechanismus erzeugt werden:
Wasserlast-Eingaben;
Luftlast-Eingaben.

## Revendications

1. Un système comprenant :
un dispositif logique (130) configuré pour recevoir des données de capteur de couple en provenance d'une unité capteur de couple, TSU *(Torque Sensor Unit)* (410, 620, 630), couplée à un mécanisme de direction (150, 600) destiné à une structure mobile et pour désengager un entraînement de pilote automatique (180) destiné à la structure mobile, le dispositif logique étant configuré pour :
recevoir (702) un cap, une direction du vent, et/ou une erreur latérale de route associés à l'entraînement de pilote automatique (180) destiné à la structure mobile ;
déterminer (704) une force appliquée à un ou plusieurs composants du mécanisme de direction destiné à la structure mobile sur la base, au moins en partie, des données de capteur de couple fournies par la TSU ; et
désengager (706) l'entraînement de pilote automatique (180) destiné à la structure mobile sur la base, au moins en partie, de la force appliquée déterminée, l'entraînement de pilote automatique étant désengagé afin de permettre une manipulation manuelle du mécanisme de direction destiné à la structure mobile ;
le dispositif logique étant configuré pour déterminer la force appliquée aux un ou plusieurs composants en caractérisant les données de capteur de couple et/ou signaux de capteur correspondants comme étant un chargement manuel appliqué au mécanisme de direction, sur la base d'un ou de plusieurs profils de charge pour le mécanisme de direction, l'entraînement de pilote automatique, et/ou la structure mobile.

2. Le système de la revendication 1, dans lequel le dispositif logique est configuré pour :
déterminer la force appliquée aux un ou plusieurs composants du mécanisme de direction sur la base, au moins en partie, d'un couple appliqué aux un ou plusieurs composants du mécanisme de direction pendant un engagement de l'entraînement de pilote automatique avec la structure mobile ;
dans lequel la TSU comprend une TSU directe comprenant un extensomètre (512) couplé et/ou intégré aux un ou plusieurs composants du mécanisme de direction.

3. Le système de la revendication 1, comprenant en outre :
un dispositif de libération d'entraînement de pilote automatique configuré pour recevoir les données de capteur de couple et/ou signaux de capteur correspondants fournis par la TSU (410, 620, 630) et désengager l'entraînement de pilote automatique (180) des un ou plusieurs composants du mécanisme de direction destiné à la structure mobile et/ou de la structure mobile, le dispositif de libération d'entraînement de pilote automatique étant calibré pour la structure mobile sur la base, au moins en partie, des un ou plusieurs profils de charge générés par l'utilisation de l'entraînement de pilote automatique avec la structure mobile, les profils de charge étant générés sur la base d'entrées de charge d'utilisateur vers le mécanisme de direction et d'au moins une des entrées suivantes vers le mécanisme de direction :
entrées de charge hydraulique ;
entrées de charge aérodynamique ;
entrées de charge de surface.

4. Le système de la revendication 1, comprenant en outre un dispositif de libération d'entraînement de pilote automatique comprenant une portion d'un moyeu de volant de direction (406) destiné au mécanisme de direction, dans lequel :
la TSU est disposée au moins partiellement à l'intérieur du moyeu de volant de direction ; et
la TSU comprend un extensomètre (512) couplé et/ou intégré au mécanisme de direction, dans lequel la force appliquée au mécanisme de direction comprend un couple appliqué au mécanisme de direction et mesuré ou détecté par l'intermédiaire de l'extensomètre.

5. Le système de la revendication 4, comprenant en outre :
une unité d'alimentation destinée au dispositif de libération d'entraînement de pilote automatique comprenant un élément parmi un panneau photovoltaïque dans un centre du moyeu de volant de direction ou un raccordement à câble métallique et bague glissante ; et
un capteur tactile (420) intégré à un volant de direction destiné à la structure mobile, dans lequel le désengagement de l'entraînement de pilote automatique destiné à la structure mobile est basé, au moins en partie, sur la force appliquée déterminée et des données de capteur tactile fournies par le capteur tactile.

6. Le système de la revendication 1, dans lequel :
la TSU comprend une TSU indirecte couplée à un bras de gouvernail ou un quadrant de gouvernail de la structure mobile ; et
la TSU indirecte comprend un élément parmi une goupille de charge en cisaillement (622, 532) ou une cellule de charge (622, 532) en traction et compression axiale avec cet un élément parmi le bras de gouvernail ou le quadrant de gouvernail, dans lequel les données de capteur de couple fournies par la TSU indirecte sont basées, au moins en partie, sur des données de capteur de cisaillement, de traction, et/ou de compression et/ou signaux fournis par la goupille de charge ou la cellule de charge.

7. Le système de la revendication 4, dans lequel les un ou plusieurs profils de charge sont générés sur la base d'au moins une des entrées suivantes vers le mécanisme de direction :
entrées de charge hydraulique ;
entrées de charge aérodynamique.

8. Le système de la revendication 6, où le dispositif logique est configuré pour : générer les un ou plusieurs profils de charge sur la base, au moins en partie, d'un chargement manuel appliqué au mécanisme de direction et d'un chargement hydraulique rétroalimenté vers ou par le bras de gouvernail ou le quadrant de gouvernail.

9. Un procédé comprenant :
la réception (702) d'un cap, d'une direction du vent, et/ou d'une erreur latérale de route associés à un entraînement de pilote automatique (180) destiné à une structure mobile ;
la détermination (704) d'une force appliquée à un ou plusieurs composants d'un mécanisme de direction destiné à la structure mobile sur la base, au moins en partie, de données de capteur de couple fournies par une unité capteur de couple, TSU ; et
le désengagement (706) de l'entraînement de pilote automatique destiné à la structure mobile sur la base, au moins en partie, de la force appliquée déterminée, l'entraînement de pilote automatique étant désengagé afin de permettre une manipulation manuelle du mécanisme de direction destiné à la structure mobile ;
dans lequel la détermination de la force appliquée aux un ou plusieurs composants comprend la caractérisation des données de capteur de couple et/ou signaux de capteur correspondants comme étant un chargement manuel appliqué au mécanisme de direction, sur la base d'un ou de plusieurs profils de charge pour le mécanisme de direction, l'entraînement de pilote automatique et/ou la structure mobile.

10. Le procédé de la revendication 9, dans lequel la détermination des un ou plusieurs signaux de capteur comprend :
la détermination de la force appliquée aux un ou plusieurs composants du mécanisme de direction sur la base, au moins en partie, d'un couple appliqué aux un ou plusieurs composants du mécanisme de direction pendant un engagement de l'entraînement de pilote automatique avec la structure mobile ;
dans lequel la TSU comprend une TSU directe comprenant un extensomètre (512) couplé et/ou intégré aux un ou plusieurs composants du mécanisme de direction.

11. Le procédé de la revendication 9, comprenant en outre :
la réception, par un dispositif de libération d'entraînement de pilote automatique, des données de capteur de couple et/ou signaux de capteur correspondants fournis par la TSU, le dispositif de libération d'entraînement de pilote automatique étant calibré pour la structure mobile sur la base, au moins en partie, des un ou plusieurs profils de charge générés par l'utilisation de l'entraînement de pilote automatique avec la structure mobile.

12. Le procédé de la revendication 9, comprenant en outre la réception, par un dispositif de libération d'entraînement de pilote automatique, des données de capteur de couple et/ou signaux de capteur correspondants fournis par la TSU, dans lequel :
la TSU est disposée au moins partiellement à l'intérieur du moyeu de volant de direction ; et
la TSU comprend un extensomètre couplé et/ou intégré au mécanisme de direction, dans lequel la force appliquée au mécanisme de direction comprend un couple appliqué au mécanisme de direction et mesuré ou détecté par l'intermédiaire de l'extensomètre.

13. Le procédé de la revendication 12, dans lequel :
le dispositif de libération d'entraînement de pilote automatique est monté sur un arbre de direction du mécanisme de direction et le moyeu de volant de direction fixe le dispositif de libération d'entraînement de pilote automatique sur l'arbre de direction.

14. Le procédé de la revendication 12, dans lequel la détermination de la force appliquée aux un ou plusieurs composants comprend :
la réception des données de capteur de couple et/ou signaux de capteur correspondants générés par l'extensomètre en provenance d'un deuxième dispositif logique du dispositif de libération d'entraînement de pilote automatique par l'intermédiaire d'un canal de communication sans fil, le deuxième dispositif logique étant configuré pour mesurer le couple par l'intermédiaire de l'extensomètre et comparer le couple mesuré à un niveau de couple seuil.

15. Le procédé de la revendication 12, dans lequel :
le dispositif de libération d'entraînement de pilote automatique comprend une unité d'alimentation incluant un élément parmi un panneau photovoltaïque dans un centre du moyeu de volant de direction ou un raccordement à câble métallique et bague glissante ; et
les profils de charge sont générés sur la base d'entrées de charge d'utilisateur vers le mécanisme de direction et d'au moins une des entrées suivantes vers le mécanisme de direction :
entrées de charge hydraulique ;
entrées de charge aérodynamique.
